(19) Europäisches Patentamt / European Patent Office / Office européen des brevets

(11) **EP 4 783 578 A1**

(12) **EUROPEAN PATENT APPLICATION**
published in accordance with Art. 153(4) EPC

(43) Date of publication:
**29.07.2026 Bulletin 2026/31**

(21) Application number: **24868754.3**

(22) Date of filing: **23.09.2024**

(51) International Patent Classification (IPC):
$H04N\ 19/132^{(2014.01)}$    $H04N\ 19/587^{(2014.01)}$
$H04N\ 19/59^{(2014.01)}$    $H04N\ 19/13^{(2014.01)}$
$H04N\ 19/70^{(2014.01)}$

(52) Cooperative Patent Classification (CPC):
H04N 19/13; H04N 19/132; H04N 19/587;
H04N 19/59; H04N 19/70

(86) International application number:
**PCT/KR2024/014284**

(87) International publication number:
**WO 2025/063778 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.09.2023 KR 20230126556**

(71) Applicant: **LG Electronics Inc.**
**Yeongdeungpo-gu**
**Seoul 07336 (KR)**

(72) Inventors:
• **NAM, Junghak**
  **Seoul 06772 (KR)**
• **PARK, Naeri**
  **Seoul 06772 (KR)**
• **LIM, Jaehyun**
  **Seoul 06772 (KR)**

(74) Representative: **Plasseraud IP**
**104 Rue de Richelieu**
**CS92104**
**75080 Paris Cedex 02 (FR)**

(54) **IMAGE ENCODING/DECODING METHOD AND APPARATUS, AND RECORDING MEDIUM STORING BITSTREAMS**

(57) An image decoding/encoding method and apparatus according to the present disclosure can acquire a prediction sample of a current block, generate a virtual sample for the current block, derive a parameter for model-based compensation of the current block on the basis of the prediction sample and the virtual sample of the current block, and acquire a corrected prediction sample by applying the parameter to the prediction sample of the current block.

FIG.4

```
Obtain prediction sample of current block                    ~ S400
                          ↓
Generate virtual sample for current block                    ~ S410
                          ↓
Derive parameter for model-based compensation
based on virtual sample and prediction sample                ~ S420
of current block
                          ↓
Obtain modified prediction sample
based on parameter and prediction sample                     ~ S430
of current block
```

EP 4 783 578 A1

## Description

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is to provide a method and an apparatus for refining a prediction sample obtained by intra prediction or inter prediction.

The present disclosure is to provide a model-based compensation method and apparatus for a prediction sample.

The present disclosure is to provide a method and an apparatus for generating a virtual sample for model-based compensation.

The present disclosure is to provide a method and an apparatus for deriving a parameter for model-based compensation.

The present disclosure is to provide a method and an apparatus for signaling information regarding model-based compensation.

[Technical Solution]

An image decoding method and apparatus according to the present disclosure may obtain a prediction sample of a current block, generate a virtual sample for the current block, derive a parameter for model-based compensation of the current block based on the prediction sample of the current block and the generated virtual sample, obtain a modified prediction sample by applying the parameter to the prediction sample of the current block and reconstruct the current block based on a modified prediction sample of the current block and a residual sample of the current block.

In an image decoding method and apparatus according to the present disclosure, the virtual sample may be generated based on a planar mode for intra prediction.

In an image decoding method and apparatus according to the present disclosure, the virtual sample may be generated based on a DC mode for intra prediction.

In an image decoding method and apparatus according to the present disclosure, the virtual sample may be generated through a weighted sum of a sample generated by applying a predetermined prediction method to the current block and a reference sample of the current block. Here, the reference sample may include at least one of a top neighboring sample or a left neighboring sample adjacent to the current block.

In an image decoding method and apparatus according to the present disclosure, the virtual sample may be generated based on a predetermined intra prediction mode, and the predetermined intra prediction mode may be derived based on decoder-side intra mode derivation (DIMD) or template-based intra mode derivation (TIMD).

In an image decoding method and apparatus according to the present disclosure, the virtual sample may be generated based on intra template matching prediction (intra-TMP).

In an image decoding method and apparatus according to the present disclosure, the virtual sample may be generated based on matrix-based intra prediction (MIP).

In an image decoding method and apparatus according to the present disclosure, the virtual sample may be generated for a sample position belonging to a partial region within the current block.

In an image decoding method and apparatus according to the present disclosure, the parameter may be a parameter of a linear model or a parameter of a convolutional model.

In an image decoding method and apparatus according to the present disclosure, the parameter may be derived as a parameter that minimizes a predetermined cost. Here, the cost may be defined based on a difference between the modified prediction sample and the virtual sample for each sample position within the current block.

In an image decoding method and apparatus according to the present disclosure, the modified prediction sample may be obtained by applying the parameter to the prediction sample and a neighboring sample adjacent to the prediction sample. The neighboring sample may include at least one of a top neighboring sample, a bottom neighboring sample, a left neighboring sample, a right neighboring sample, a top-left neighboring sample, a top-right neighboring sample, a bottom-left neighboring sample or a bottom-right neighboring sample of the prediction sample.

An image encoding method and apparatus according to the present disclosure may obtain a prediction sample of a current block, generate a virtual sample for the current block, derive a parameter for model-based compensation of the current block based on the prediction sample of the current block and the generated virtual sample, obtain a modified prediction sample by applying the parameter to the prediction sample of the current block, generate a residual sample of the current block based on a modified prediction sample of the current block and encode the residual sample of the current block.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and an apparatus for transmitting video/image information generated according to an image encoding method according to the present disclosure are provided.

[Advantageous Effects]

According to the present disclosure, prediction accuracy may be improved by refining a prediction sample through intra prediction or inter prediction.

According to the present disclosure, prediction accuracy may be improved through model-based compensation for a prediction sample.

According to the present disclosure, encoding efficiency may be improved by proposing a method for generating a virtual sample and a method for deriving a parameter for model-based compensation.

According to the present disclosure, information regarding model-based compensation may be efficiently signaled.

[Brief Description of Drawings]

FIG. 1 shows a video/image coding system according to the present disclosure.

FIG. 2 shows a schematic block diagram of an encoding apparatus to which an embodiment of the present disclosure is applicable and encoding of video/image signals is performed.

FIG. 3 shows a schematic block diagram of a decoding apparatus to which an embodiment of the present disclosure is applicable and decoding of video/image signals is performed.

FIG. 4 illustrates a model-based compensation method performed by the decoding apparatus 300, as an embodiment according to the present disclosure.

FIG. 5 illustrates a schematic configuration of the decoding apparatus 300 that performs a model-based compensation method according to the present disclosure.

FIG. 6 illustrates a model-based compensation method performed by the encoding apparatus 200, as an embodiment according to the present disclosure.

FIG. 7 illustrates a schematic configuration of the encoding apparatus 200 that performs a model-based compensation method according to the present disclosure.

FIG. 8 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, the first component may be referred to as the second component without departing from the scope of a right of the present disclosure, and similarly, the second component may also be referred to as the first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular region composed of a plurality of CTUs within a specific tile column and a specific tile row of one picture. A tile column is a rectangular region of CTUs having the same height as that of a picture and a width designated by a syntax requirement of a picture parameter set. A tile row is a rectangular region of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular region of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific region of a picture and information related to a corresponding region. One unit may include one luma block and two chroma (ex. cb, cr) blocks. In some cases, a unit may be used interchangeably with a term such as a block or an region, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

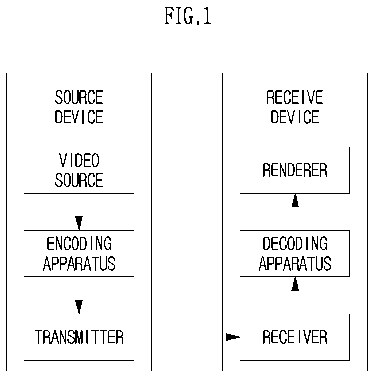

FIG. 1 shows a video/image coding system according to the present disclosure.

Referring to FIG. 1, a video/image coding system may include the first device (a source device) and the second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

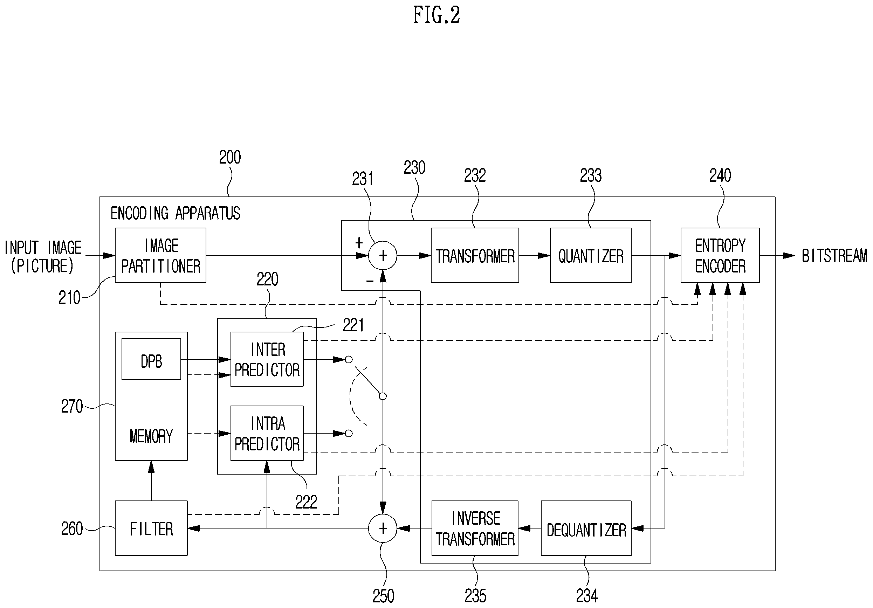

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an region, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a neighboring block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may reorder quantized transform coefficients in a block form into a 1D vector form based on coefficient scan order, and may generate information on the quantized transform coefficients based on the quantized transform coefficients in the 1D vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictor 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

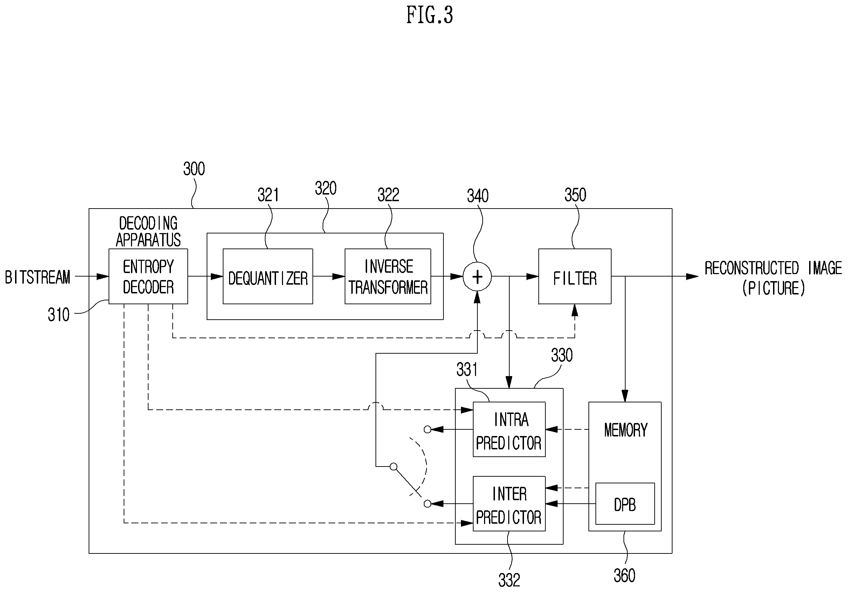

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a neighboring block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may reorder quantized transform coefficients into a two-dimensional block form. In this case, the reordering may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

The present disclosure relates to a method for obtaining a prediction sample. In particular, according to the present disclosure, a model that compensates for a difference in a sample value between the virtual sample of a current block and a prediction sample may be derived, which may be applied to the prediction sample of a current block to obtain a modified prediction sample. Hereinafter, it will be referred to as model-based compensation or model-based sample modification. The present disclosure may be distinguished from an existing method for using a neighboring sample adjacent to a prediction block and a current block.

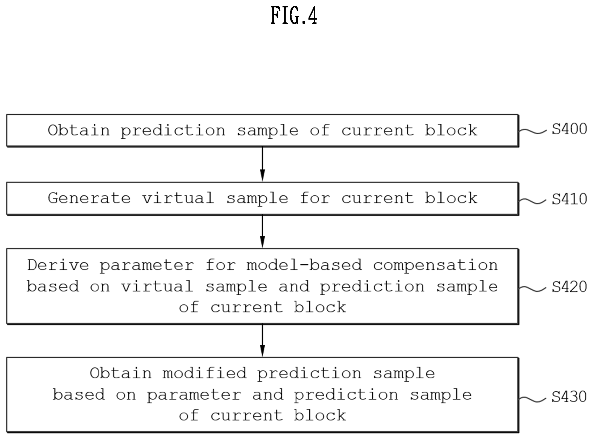

FIG. 4 illustrates a model-based compensation method performed by the decoding apparatus 300, as an embodiment according to the present disclosure.

Referring to FIG. 4, the prediction sample of a current block may be obtained S400.

The prediction sample of a current block may be obtained based on intra prediction.

As an example, the prediction sample of a current block may be obtained based on intra template matching prediction (intra TMP). In other words, a region matching or most similar to the template of a current block may be searched within a pre-reconstructed region within a current picture, and a block using a corresponding region as a template may be determined as a reference block. The prediction sample of a current block may be obtained based on the reconstructed sample of a corresponding reference block. The search may be performed within a pre-defined search range within the pre-reconstructed region. A cost with the template of a current block may be calculated by going around within the pre-defined search range. A block using a region with the smallest cost among the calculated costs as a template may be selected. Here, a cost may be calculated based on the sum of absolute difference (SAD), the sum of absolute transformed difference (SATD) or the sum of squared difference (SSE). The pre-defined search range may include at least one of a current coding tree unit (CTU) to which a current block belongs or a neighboring CTU adjacent to a current CTU. Here, a neighboring CTU may include at least one of a top-left neighboring CTU, a top neighboring CTU or a left neighboring CTU. Alternatively, a current block may be a block encoded in an intra block copy (IBC) mode. In this case, a reference block may be determined based on the block vector of a current block, and the prediction sample of a current block may be obtained based on the reconstructed sample of a corresponding reference block. The block vector may specify the position of a reference block in a pre-reconstructed region within a current picture. Similarly, the reference block may belong to the same current picture as a current block.

Alternatively, the prediction sample of a current block may be obtained based on inter prediction.

As an example, the prediction sample of a current block may be obtained based on a motion compensation method using a motion vector (e.g., a merge mode, an AMVP mode). Alternatively, the prediction sample of a current block may be obtained based on combined inter and intra prediction (CIIP). Alternatively, the prediction sample of a current block may be obtained based on a geometric partitioning mode. When a geometric partitioning mode is applied to a current block, a current block may be partitioned into two partitions (i.e., the first partition and the second partition), and the prediction sample of a current block may be obtained based on the weighted sum of the first prediction sample for the first partition and the second prediction sample for the second partition. Here, both the first and second prediction samples may be generated based on intra prediction. Alternatively, both the first and second prediction samples may be generated based on inter prediction. Alternatively, one of the first prediction sample or the second prediction sample may be generated based on intra prediction, and the other may be generated based on inter prediction. Alternatively, the prediction sample of a current block may be obtained based on a multi-hypothesis prediction (MHP) mode. An MHP mode may be a method for obtaining a prediction sample based on the weighted sum of an initial prediction sample and one or more additional prediction samples. Here, at least one of an initial prediction sample or an additional prediction sample may be obtained based on a motion compensation method described above.

Referring to FIG. 4, a virtual sample for a current block may be generated S410.

A virtual sample according to the present disclosure may be generated to represent the sample value of a current block. The virtual sample of a current block may be generated based on reconstructed sample(s) around a current block. Here, a virtual sample may be a prediction sample or a reconstructed sample generated by a method described below. The virtual sample may correspond to the same sample position as the prediction sample of a current block. The generated virtual sample may be used as an input to derive the compensation model of a prediction sample. To generate a virtual sample with the same value in an encoding apparatus and a decoding apparatus, neighboring reconstructed sample(s) that may be used in the encoding and decoding steps of a current block may be used. The virtual sample of a current block may be generated by using sample(s) in a region encoded/decoded before a current block. The virtual sample of a current block may be generated by one method described below or may be generated by a combination of two or more methods.

Method 1

The virtual sample of a current block may be generated based on a planar mode used in intra prediction. The virtual sample of a current block may be generated based on the weighted sum of at least two neighboring samples adjacent to a current block. Here, at least two neighboring samples may include at least two of a top neighboring sample, a bottom-left neighboring sample, a left neighboring sample or a top-right neighboring sample. As an example, the virtual sample of a current block may be generated as shown in Equation 1 below.

[Equation 1]

$$genV[\,x\,][\,y\,] = (\,(\,nTbH - 1 - y\,) * ref[\,x\,][\,-1\,] + (\,y + 1\,) * ref[\,-1\,][\,nTbH\,]\,) << Log2\,(\,nTbW\,)$$

$$genH[\,x\,][\,y\,] = (\,(\,nTbW - 1 - x\,) * ref[\,-1\,][\,y\,] + (\,x + 1\,) * ref[\,nTbW\,][\,-1\,]\,) << Log2\,(\,nTbH\,)$$

$$genSamples[\,x\,][\,y\,] = (\,genV[\,x\,][\,y\,] + genH[\,x\,][\,y\,] + nTbW * nTbH\,) >> (\,Log2\,(\,nTbW\,) + Log2\,(\,nTbH\,) + 1\,)$$

In Equation 1, genSamples[ x ][ y ] represents a virtual sample at a (x, y) position generated for a current block. Here, a value of x may have a range from 0 to (nTbW - 1), and a value of y may have a range from 0 to (nTbH - 1). nTbW represents the width of a current block, and nTbH represents the height of a current block. ref[ x ][ y ] may represent a reference sample for generating the virtual sample of a current block. In particular, ref[ x ][ -1 ] is a top neighboring sample adjacent to a current block, which may have the same x-coordinate as a virtual sample to be generated. ref[ -1 ][ nTbH ] may be a top-right neighboring sample adjacent to a current block. ref[ -1 ][ y ] is a left neighboring sample adjacent to a current block, which may have the same y-coordinate as a virtual sample to be generated. ref[ nTbW ][ -1 ] may be a bottom-left neighboring sample adjacent to a current block.

Method 2

The virtual sample of a current block may be generated based on a DC mode used in intra prediction. The virtual sample of a current block may be generated based on the average value of reconstructed sample(s) belonging to the neighboring region of a current block. Here, a neighboring region may include at least one of a top neighboring region, a left neighboring region, a top-left neighboring region, a bottom-left neighboring region or a top-right neighboring region.
As an example, the virtual sample of a current block may be generated as shown in Equation 2 below.

$$[\text{Equation 2}]$$
$$\text{genSamples}[\ x\ ][\ y\ ] = \text{dcVal}$$

In Equation 2, a value of dcVal may be calculated based on the width (nTbW) and height (nTbH) of a current block as follows. Specifically, when nTbW and nTbH are the same, a value of dcVal may be calculated as in Equation 3.

$$[\text{Equation 3}]$$
$$\text{dcVal} = (\ \sum_{x'=0}^{\text{nTbW}-1} \text{ref}[x'][-1]\ +\ \sum_{y'=0}^{\text{nTbH}-1} \text{ref}[-1][y']\ +\text{nTbW}\ )\ \ >>\ \ (\ \text{Log2}(\ \text{nTbW}\ ) + 1\ )$$

Alternatively, when nTbW is greater than nTbH, a value of dcVal may be calculated as in Equation 4.

$$[\text{Equation 4}]$$
$$\text{dcVal} = (\ \sum_{x'=0}^{\text{nTbW}-1} \text{ref}[x'][-1]\ +( \text{nTbW} >> 1\ ) )\ \ >>\ \ \text{Log2}(\ \text{nTbW}\ )$$

Alternatively, when nTbW is less than nTbH, a value of dcVal may be calculated as in Equation 5.

$$[\text{Equation 5}]$$
$$\text{dcVal} = (\ \sum_{y'=0}^{\text{nTbH}-1} \text{ref}[-1][y']\ +( \text{nTbH} >> 1\ ) )\ \ >>\ \ \text{Log2}(\ \text{nTbH}\ )$$

Alternatively, regardless of the width and height of a current block, a value of dcVal may be calculated as in Equation 6.

$$[\text{Equation 6}]$$
$$\text{dcVal} = (\ \sum_{x'=0}^{\text{nTbW}-1} \text{ref}[x'][-1]\ +\ \sum_{y'=0}^{\text{nTbH}-1} \text{ref}[-1][y']\ +( \text{nTbW} + \text{nTbH}\ )/2\ )\ \ /\ \ (\ \text{nTbW} + \text{nTbH}\ )$$

In Equation 2, genSamples[ x ][ y ] represents a virtual sample at a (x, y) position generated for a current block. Here, a value of x may have a range from 0 to (nTbW - 1), and a value of y may have a range from 0 to (nTbH - 1). In Equation 3 to 6, nTbW represents the width of a current block, and nTbH represents the height of a current block. ref[ x ][ y ] may represent a reference sample for generating the virtual sample of a current block. In particular, ref[ x' ][ -1 ] may be a top neighboring sample adjacent to a current block. ref[ -1 ][ y' ] may be a left neighboring sample adjacent to a current block.

Method 3

The virtual sample of a current block may be generated through the weighted sum of a sample generated by applying a predetermined prediction method to a current block and reference sample(s) of the current block. The reference sample may be a neighboring sample adjacent to a current block, and the neighboring sample may include at least one of the top neighboring sample or left neighboring sample of a current block. Here, a top neighboring sample may be a sample having the same x-coordinate as a virtual sample, and a left neighboring sample may be a sample having the same y-coordinate as a virtual sample.
Here, the prediction method may be the above-described intra template matching prediction or intra block copy (IBC) mode. Alternatively, the prediction method may be a motion compensation method using a motion vector. Alternatively, the prediction method may be a planar mode or a DC mode.
Alternatively, a sample generated by applying a predetermined prediction method to a current block may be derived as an average value between the reference samples of the current block. The reference samples of a current block may include a top neighboring sample and a left neighboring sample adjacent to a current block.
As an example, the virtual sample of a current block may be generated as in Equation 7 below.

[Equation 7]

$$genSamples[\ x\ ][\ y\ ] = Clip1(\ (\quad refL[\ x\ ][\ y\ ] * wL[\ x\ ] + refT[\ x\ ][\ y\ ] * wT[\ y\ ] +\quad(\ 64 - wL[\ x\ ] - wT[\ y\ ]\ ) *$$

$$p[\ x\ ][\ y\ ] + 32\quad)\quad >>\quad 6\ )$$

$$refL[\ x\ ][\ y\ ] = p[\ -1\ ][\ y\ ]$$

$$refT[\ x\ ][\ y\ ] = p[\ x\ ][\ -1\ ]$$

$$wT[\ y\ ] = 32\quad >>\quad (\ (\ y\quad <<\quad 1\ )\quad >>\quad nScale\ )$$

$$wL[\ x\ ] = 32\quad >>\quad (\ (\ x\quad <<\quad 1\ )\quad >>\quad nScale\ )$$

$$nScale = (\ Log2(\ nTbW\ ) + Log2(\ nTbH\ ) - 2\ )\quad >>\quad 2$$

In Equation 7, genSamples[ x ][ y ] represents a virtual sample at a (x, y) position generated for a current block. Here, a value of x may have a range from 0 to (nTbW - 1), and a value of y may have a range from 0 to (nTbH - 1). refL[ x ][ y ] and refT[ x ][ y ] may represent reference samples used to generate a virtual sample at a (x, y) position, respectively. For example, refL[ x ][ y ] may represent a left neighboring sample adjacent to a current block, and refT[ x ][ y ] may represent a top neighboring sample adjacent to a current block. wL[ x ] may represent a weight applied to reference sample refL[ x ][ y ], which may be determined based on the x-coordinate of a virtual sample and/or the width and height of a current block. wT [ y ] may represent a weight applied to reference sample refT[ x ][ y ], which may be determined based on the y-coordinate of a virtual sample and/or the width and height of a current block. nTbW represents the width of a current block, and nTbH represents the height of a current block. p[ x ][ y ] may represent a sample at a (x, y) position generated by applying a predetermined prediction method to a current block.

Method 4

The intra prediction mode of a current block may be derived based on a decoder-side intra mode derivation (DIMD) method, and the virtual sample of a current block may be generated based on a corresponding intra prediction mode.

Specifically, a gradient may be calculated based on at least two samples belonging to the neighboring region of a current block. Here, a gradient may include at least one of a horizontal gradient or a vertical gradient. The intra prediction mode of a current block may be derived based on at least one of the calculated gradient or a gradient amplitude. Here, a gradient amplitude may be determined based on the sum of the horizontal gradient and the vertical gradient. Through this derivation method, one intra prediction mode may be derived or two or more intra prediction modes may be derived for a current block.

A gradient may be calculated in the unit of a window having a predetermined size. An angle representing the directionality of a sample within a corresponding window may be calculated based on a calculated gradient. A calculated angle may correspond to any one of a plurality of pre-defined intra prediction modes described above. The amplitude of the gradient may be stored/updated for an intra prediction mode corresponding to the calculated angle. Through this process, an intra prediction mode corresponding to a calculated gradient may be determined for each window, and the amplitude of a gradient may be stored/updated for a determined intra prediction mode. The top T intra prediction modes having the largest amplitude among the stored amplitudes of the gradient may be selected, and a selected intra prediction mode may be set as the intra prediction mode of a current block. Here, T may be an integer of 1, 2, 3 or more.

A neighboring region used to calculate the gradient is a region which is pre-reconstructed before a current block, which may include at least one of a left region, a top region, a top-left region, a bottom-left region or a top-right region adjacent to a current block. The neighboring region may include at least one of a neighbor sample line adjacent to a current block, the first non-neighbor sample line spaced apart by 1-sample from a current block or the second non-neighbor sample line spaced apart by 2-sample from a current block. However, it is not limited thereto, and a non-neighbor sample line spaced apart by N-sample from a current block may be further included, and N may be an integer greater than or equal to 3.

The neighboring region may be a region pre-defined equally for an encoding apparatus and a decoding apparatus to calculate the gradient. Alternatively, the neighboring region may be variably determined based on information specifying the position of the neighboring region. In this case, information specifying the position of the neighboring region may be signaled through a bitstream. Alternatively, the position of the neighboring region may be determined based on at least one of whether a current block is positioned at the boundary of a coding tree unit, the size of a current block (e.g., the width, the height, the ratio of the width and height, the product of the width and height), the partitioning type of a current block, the prediction mode of a neighboring region or the availability of a neighboring region.

Method 5

The intra prediction mode of a current block may be derived based on a template based intra mode derivation (TIMD) method, and the virtual sample of a current block may be generated based on a corresponding intra prediction mode.

Specifically, a cost for each of the predetermined candidate modes may be calculated. The predetermined candidate modes may refer to a plurality of intra prediction modes pre-defined equally for an encoding apparatus and a decoding apparatus. Alternatively, for template region-based derivation, a candidate list composed of the candidate modes may be generated, and a cost may be calculated for candidate modes belonging to the candidate list. Alternatively, a cost may be calculated only for the top N candidate modes within the generated candidate list. Here, N may be a value pre-defined equally for an encoding apparatus and a decoding apparatus. As an example, N may be an integer of 2, 3, 4, 5 or more.

The cost may be calculated as the sum of absolute difference (SAD) between reconstructed samples and prediction samples within a template region. Alternatively, the cost may also be calculated as the sum of absolute transformed difference (SATD) between reconstructed samples and prediction samples within a template region. Here, SATD may refer to SAD transformed into a frequency domain. As an example of the transform, Hadamard transform may be used, but is not limited thereto. The prediction samples of a template region may be generated based on the above-described candidate mode.

A template region for calculating the cost may be a pre-reconstructed region adjacent to a current block. As an example, the template region may include at least one of the top neighboring region, the left neighboring region, the top-left neighboring region, the bottom-left neighboring region or the top-right neighboring region of a current block.

The template region may be a region pre-defined equally for an encoding apparatus and a decoding apparatus to calculate the cost. Alternatively, the template region may be variably determined based on information specifying the position of the template region. In this case, information specifying the position of a template region may be signaled through a bitstream. Alternatively, the position of a template region may be determined based on at least one of whether a current block is positioned at the boundary of a coding tree unit, the size of a current block (e.g., the width, the height, the ratio of the width and height, the product of the width and height), the partitioning type of a current block, the prediction mode of a neighboring region or the availability of a neighboring region.

One candidate mode with the minimum cost among the costs calculated for the candidate modes may be selected. As an example, a cost for five candidate modes within a candidate list may be calculated, respectively. The five candidate modes in a candidate list may be reordered in ascending order of the calculated costs. The top one candidate mode may be selected among the 5 reordered candidate modes.

Alternatively, at least two candidate modes with the minimum cost among the costs calculated for the candidate modes may also be selected. As an example, a cost for five candidate modes within a candidate list may be calculated, respectively. The five candidate modes in a candidate list may be reordered in ascending order of the calculated costs. The top two candidate modes may be selected among the five reordered candidate modes.

One or more candidate modes selected through the above-described process may be set as the intra prediction mode of a current block.

Alternatively, when at least two candidate modes are selected through the above-described process, the intra prediction mode of a current block may be derived based on a comparison between the selected candidate modes and/or a comparison between at least one of the selected candidate modes and a threshold value. As an example, the intra prediction mode of a current block may be derived based on whether selected candidate modes satisfy the following condition.

[Condition] costMode2 < (K x costMode1)

In the condition, costMode1 may refer to a cost calculated based on any one of the selected candidate modes, and costMode2 may refer to a cost calculated based on another of the selected candidate modes. As an example, costMode1 may refer to a cost calculated based on a candidate mode with a smaller cost among the selected candidate modes, and costMode2 may refer to a cost calculated based on a candidate mode with a larger cost among the selected candidate modes. In the condition, K represents a predetermined comparison factor, which may be a value pre-defined equally for an encoding apparatus and a decoding apparatus. As an example, K may be an integer of 1, 2 or more or may refer to a real number such as 1/2 or 1/4.

When the condition is satisfied, the selected candidate modes may be set as the intra prediction mode of a current block. On the other hand, when the condition is not satisfied, a candidate mode with a cost of costMode1 may be set as the intra prediction mode of a current block, and a candidate mode with a cost of costMode2 may not be used as the intra prediction mode of a current block.

Method 6

The virtual sample of a current block may be generated based on intra template matching prediction (intra TMP).

Specifically, a region matching or most similar to the template of a current block may be searched within a pre-reconstructed region within a current picture, and a block using a corresponding region as a template may be determined as a reference block. The virtual sample of a current block may be generated based on the reconstructed sample of a corresponding reference block.

The search may be performed within a pre-defined search range within the pre-reconstructed region. A cost with the template of a current block may be calculated by going around within the pre-defined search range. A block using a region with the smallest cost among the calculated costs as a template may be selected. Here, a cost may be calculated based on the sum of absolute difference (SAD), the sum of absolute transformed difference (SATD) or the sum of squared difference (SSE). The pre-defined search range may include at least one of a current coding tree unit (CTU) to which a current block belongs or a neighboring CTU adjacent to a current CTU. Here, a neighboring CTU may include at least one of a top-left neighboring CTU, a top neighboring CTU or a left neighboring CTU.

The template of the current block may be composed of neighboring regions adjacent to a current block. Here, a neighboring region may include at least one of a left neighboring region, a top neighboring region or a top-left neighboring region. A top neighboring region may be composed of N horizontal sample lines, and a left neighboring region may be composed of M vertical sample lines. N and M are an integer greater than or equal to 1. N and M may be the same or different from each other. The size and/or position of a template for a current block may be variably determined according to the size and/or position of a current block.

Method 7

The virtual sample of a current block may be generated based on matrix-based intra prediction (MIP). Any one of a plurality of matrices pre-defined equally for an encoding apparatus and a decoding apparatus may be selectively used. Any one of a plurality of matrices may be specified based on the size of a current block. The coefficients of each matrix may be predefined equally for an encoding apparatus and a decoding apparatus.

Method 8

The virtual sample of a current block may be generated through multi-reference line (MRL)-based intra prediction.

As an example, the prediction sample of a current block may be obtained by using at least one sample belonging to a reference line adjacent to a current block (e.g., the first reference line) as a reference sample. In this case, the virtual sample of a current block may be generated by applying the same method as a method for obtaining the prediction sample, but using at least one sample belonging to a reference line not adjacent to a current block (e.g., the second, third or fourth reference line) as a reference sample. Alternatively, the virtual sample of a current block may be generated by applying any one of the above-described methods 1 to 7, but using at least one sample belonging to a reference line not adjacent to a current block (e.g., the second, third or fourth reference line) as a reference sample.

Alternatively, the prediction sample of a current block may be obtained by using at least one sample belonging to a reference line adjacent to a current block as a reference sample. In this case, the virtual sample of a current block may be generated by applying the same method as a method for obtaining the prediction sample, but using at least one sample belonging to a reference line adjacent to a current block as a reference sample. Alternatively, the virtual sample of a current block may be generated by applying any one of the above-described methods 1 to 7, but using at least one sample belonging to a reference line adjacent to a current block as a reference sample.

According to the present disclosure, the size/range of a region where a virtual sample is generated within a current block may be variable.

As an example, a virtual sample may be generated for all sample positions within a current block. When a current block is a WxH block, the number of virtual samples generated for a current block may be (W*H).

A virtual sample may also be generated only for a sample position belonging to a partial region within a current block. For example, a partial region may be composed of N vertical sample lines from the left and M horizontal sample lines from the top. N may be an integer greater than or equal to 0 and less than the width (W) of a current block. M may be an integer greater than or equal to 0 and less than the height (H) of a current block. Alternatively, the size/range of a partial region may be variably determined based on the size of a current block. For example, the size/range of a partial region according to the size of a current block may be determined as in Equation 8 below.

[Equation 8]

$$N = W >> i$$

$$M = H >> j$$

In Equation 8, a value of i may be any one of 1, 2, 3, 4 or 5. A value of j may be any one of 1, 2, 3, 4 or 5. i and j may be a value that is pre-defined equally for an encoding apparatus and a decoding apparatus. i and j may be the same or defined differently.

A partial region within a current block may be defined as the remaining regions excluding the predetermined bottom-right region of a current block. Here, a bottom-right region may be defined as an NxM block. N may be an integer greater than or equal to 0 and less than the width (W) of a current block, and M may be an integer greater than or equal to 0 and less than the height (H) of a current block. Alternatively, a bottom-right region may be variably determined based on the size of a current block. For example, a bottom-right region may be determined as in Equation 8 described above.

A virtual sample may be generated only for a sample position positioned on the block boundary of a current block. Here, a block boundary may include at least one of the top boundary, left boundary, right boundary or bottom boundary of a current block.

In this way, when a virtual sample is not generated for all sample positions within a current block, a model for refining a prediction sample may be derived by using only a generated virtual sample.

A partial region described above are merely an example, and it goes without saying that an arbitrary region within a current block may be defined in advance and a virtual sample may be generated only for a corresponding region.

One virtual sample may be generated for each sample position within a current block. Alternatively, two or more virtual samples may be generated for each sample position. Any one of the two or more virtual samples may be generated based on any one of the above-described methods 1 to 8, and the other may be generated based on another method. In this case, a final virtual sample may be generated through the weighted sum of two or more virtual samples.

Alternatively, an index specifying any one of a plurality of methods pre-defined for generating the virtual sample of a current block. may be defined. Any one of a plurality of methods may be selected based on the index, and the virtual sample of a current block may be generated based on a selected method. The plurality of pre-defined methods are candidate methods for generating a virtual sample, and may include at least one of the above-described methods 1 to 8. The index may be signaled through a bitstream or derived based on the attribute of a current block. The attribute of a current block may include at least one of a size, a prediction method used to obtain a prediction sample, a component type or whether geometric partitioning is applied.

As an example, when a plurality of methods for generating a virtual sample are defined for one sequence or image, a flag or an index selecting any one of a plurality of methods may be signaled in the unit of a picture or a slice. Table 1 below is an example in which ph_gen_samples_idx is signaled in a picture header.

[Table 1]

| picture_header_structure( ) { | **Descriptor** |
|---|---|
| ... | |
| **ph_gen_samples_idx** | ue(v) |
| ... | |
| } | |

In Table 1, ph_gen_samples_idx may be an index that selects any one of a plurality of methods for generating a virtual sample in a current picture. Table 2 below is an example in which a mapping relationship between the values of ph_gen_samples_idx and a plurality of methods described above is shown.

[Table 2]

| **ph_gen_samples_idx** | Method |
|---|---|
| 0 | Method 1 |
| 1 | Method 2 |
| 2 | Method 3 |

(continued)

| ph_gen_samples_idx | Method |
|---|---|
| 3 | Method 4 |
| 4 | Method 5 |
| 5 | Method 6 |
| 6 | Method 7 |
| 7 | Method 8 |
| 8 | Reserved |

Alternatively, a flag or an index selecting any one of a plurality of methods for generating a virtual sample may be signaled in a coding unit syntax regarding a current block. Alternatively, a flag or an index selecting any one of a plurality of methods for generating a virtual sample may be signaled at a sequence level, and a flag representing whether to include a corresponding flag or index in a low-level syntax may be signaled separately.

Referring to FIG. 4, a parameter for model-based compensation may be derived based on the prediction sample and virtual sample of a current block S420.

Specifically, one or more models may be defined based on the prediction sample and virtual sample of a current block, and the parameter of each model may be derived.

As an example, a model according to the present disclosure may have the form of a first-order linear model, as in Equation 9 below.

$$[\text{Equation 9}]$$
$$P'[\,x\,][\,y\,] = a0 \times P[\,x\,][\,y\,] + a1$$

In the model of Equation 9, $P[\,x\,][\,y\,]$ may represent the prediction sample of a current block, and $P'[\,x\,][\,y\,]$ may represent a modified prediction sample based on the model of the present disclosure. When the width and height of a current block are nTbW and nTbH, respectively, a value of x in $P[\,x\,][\,y\,]$ may have a range from 0 to (nTbW - 1), and a value of y may have a range from 0 to (nTbH - 1). a0 and a1 are the parameter of a linear model, and may be derived according to Equation 10 below. a0 and a1 may correspond to a weight parameter and an offset parameter among the parameters of a linear model, respectively.

$$[\text{Equation 10}]$$
$$\text{ErrCost} = \sum (\,\text{genSamples}[\,x\,][\,y\,] - (a0 \times P[\,x\,][\,y\,] + a1)\,)^2$$

According to Equation 10, for each sample position within a current block, the square of a difference between a virtual sample and a modified prediction sample may be calculated and ErrCost may be derived as the sum of calculated values. Here, a modified prediction sample may be derived based on the parameter of a linear model, as in Equation 9. In this case, a0 and a1 may be derived as a value that minimizes ErrCost for a current block. Clearly, when a virtual sample is generated only for a sample position belonging to a partial region within a current block, the parameter of a model may be derived based only on a corresponding virtual sample and a prediction sample corresponding thereto.

Alternatively, a model according to the present disclosure may have the form of a convolution. In this case, a current sample (C) and one or more neighboring samples adjacent thereto may be used. The neighboring sample may include at least one of a left sample (L), a right sample (R), a top sample (A), a bottom sample (B), a top-left sample (AL), a top-right sample (AR), a bottom-left sample (BL) or a bottom-right sample (BR). Here, a current sample (C) is a prediction sample obtained in S400, and may refer to a sample to be currently modified.

A model in the form of a convolution according to the present disclosure may be defined as in Equation 11 below.

$$[\text{Equation 11}]$$
$$P'[\,x\,][\,y\,] = a0 \times C + a1 \times L + a2 \times R + a3 \times A + a4 \times B$$

According to Equation 11, a model may be defined that uses a current sample (C) and samples (L, R, A, B) positioned on the left, right, top and bottom of it. a0 to a4 are the parameter of a convolutional model, and may be derived as in Equation 12 below. a0 to a4 may correspond to the weight parameter of the parameter of a convolutional model.

[Equation 12]

$$\text{ErrCost} = \sum (\text{genSamples}[\,x\,][\,y\,] - (a_0 \times C + a_1 \times L + a_2 \times R + a_3 \times A + a_4 \times B)\,)^2$$

According to Equation 12, for each sample position within a current block, the square of a difference between a virtual sample and a modified prediction sample may be calculated and ErrCost may be derived as the sum of calculated values. Here, a modified prediction sample may be derived based on the parameter of a convolutional model, as in Equation 11. In this case, a0 to a4 may be derived as a value that minimizes ErrCost for a current block.
Equation 12 above may also be expressed as in Equation 13 below.

[Equation 13]

$$\text{ErrCost} = \sum (\text{genSamples}[\,x\,][\,y\,] - (a0 \times P[\,x\,][\,y\,] + a1 \times P[\,x-1\,][\,y\,] + a2 \times P[\,x+1\,][\,y\,] + a3 \times P[\,x\,][\,y-1\,] + a4 \times P[\,x\,][\,y+1\,])\,)^2$$

The convolutional model may be defined in various forms according to the number of neighboring samples used other than a current sample (C). As an example, all eight neighboring samples (L, R, A, B, AL, AR, BL, BR) adjacent to a current sample (C) may be used. Alternatively, five neighboring samples adjacent to a current sample (C) may be used. Here, five neighboring samples may be composed of {L, R, A, AL, AR} or {L, R, B, BL, BR}. Alternatively, two neighboring samples adjacent to a current sample (C) may be used. Here, two neighboring samples may be composed of {L, R}, {A, B}, {AL, AR} or {BL, BR}.
The parameter of the convolution model may include at least one of an offset parameter or a nonlinear parameter. The offset parameter may be defined as the intermediate value of the bit depth of an input image or may be defined as the average value of an input sample. Here, an input sample may refer to a current sample (C) and its neighboring samples input to a convolutional model. The nonlinear parameter may refer to a parameter having a nonlinear feature such as the square value of a current sample. The nonlinear parameter may be a weight parameter applied to the square value of an input sample (at least one of a current sample or a neighboring sample) in a convolutional model.
For convenience of explanation, the above-described example uses 3×3-sized neighboring samples having a current sample (C) as a center sample, but it is not limited thereto. As an example, all or a part of neighboring samples of a size such as 5x5 or 13x13 having a current sample (C) as a center sample may be used.
The number of neighboring samples used for a convolutional model, whether to use an offset parameter and a nonlinear parameter, etc. may be variably determined by considering complexity and model performance.
As described above, the parameter of a model according to the present disclosure may be derived based on the prediction sample region of a current block. However, it is not limited thereto, and the parameter of a model may also be derived based on the difference signal region (or residual sample region) of a current block. In this case, the input sample of a linear model or a convolutional model may be a residual sample corresponding thereto, not a prediction sample.
Meanwhile, a neighboring sample used for a convolutional model may be unavailable. As an example, a neighboring sample used for a convolutional model may be positioned outside a current block. To address this issue, a padding process may be performed on the outer region adjacent to the boundary of a current block. The number of padded samples may be determined according to the number of neighboring samples used for convolution.
The padding process may be a process of substituting an unavailable sample among the neighboring samples input to a convolutional model with an available sample within a current block. The available sample may be a sample positioned at the boundary of a current block. As an example, when the top sample (A, AL, AR) of a current sample is an unavailable sample, a top sample may be substituted with a current sample or a bottom sample adjacent to a corresponding top sample. When the left sample (L, AL, BL) of a current sample is an unavailable sample, a left sample may be substituted with a current sample or a right sample adjacent to a corresponding left sample. When the bottom sample (B, BL, BR) of a current sample is an unavailable sample, a bottom sample may be substituted with a current sample or a top sample adjacent to a corresponding bottom sample. When the right sample (R, AR, BR) of a current sample is an unavailable sample, a right sample may be substituted with a current sample or a left sample adjacent to a corresponding right sample. Alternatively, the padding may be performed to have a mirror form centering on the boundary of a current block.
The parameter of any one of a pre-defined linear model or convolutional model may be derived for a current block. Alternatively, an index specifying any one of a plurality of models may be defined. Any one of a plurality of models may be selected based on a corresponding index, and the parameter of a selected model may be derived. Here, an index may be signaled through a bitstream or derived based on the attribute of a current block. The attribute of a current block may include at least one of a size, a prediction method used to obtain a prediction sample, a component type or whether geometric partitioning is applied. Alternatively, a parameter for each of a plurality of models may be derived for a current block.
As an example, when a plurality of models are defined for one sequence or image, a flag or an index selecting any one of a plurality of models may be signaled in the unit of a picture or a slice. Table 3 below is an example in which ph_mbc_model_idx is signaled in a picture header.

[Table 3]

| picture_header_structure( ) { | Descriptor |
|---|---|
| ... | |
| **ph_mbc_model_idx** | ue(v) |
| ... | |
| } | |

In Table 3, ph_mbc_model_idx may be an index that selects any one of a plurality of models for model-based compensation in a current picture. Table 4 below is an example in which a mapping relationship between the values of ph_mbc_model_idx and a plurality of models described above is shown.

[Table 4]

| **ph_mbc_model_idx** | Model |
|---|---|
| 0 | Linear Model |
| 1 | Convolutional Model |
| 2 | Reserved |

An index selecting any one of a plurality of models for model-based compensation may be signaled in a coding unit syntax regarding a current block. The index may be expressed as cu_mbc_model_idx, which may be signaled as in Table 5 below.

[Table 5]

| coding_unit( ) { | Descriptor |
|---|---|
| ... | |
| if( sps_model_based_compensation_enabled_flag ) | |
| **mbc_flag** | ae(v) |
| if( mbc_flag ) | |
| **cu_mbc_model_idx** | ae(v) |
| ... | |
| } | |

According to Table 5, cu_mbc_model_idx may be signaled when a flag (mbc_flag) representing whether model-based compensation is applied in a current coding unit (or a current block) is 1. On the other hand, cu_mbc_model_idx may not be signaled when mbc_flag is 0.

When the value of cu_mbc_model_idx is 0, it may indicate that a linear model is selected as a model for model-based compensation. When the value of cu_mbc_model_idx is 1, it may indicate that a convolutional model is selected as a model for model-based compensation. However, it is just an example, and the plurality of models may additionally include another model other than a linear model and a convolutional model.

Referring to FIG. 4, a modified prediction sample may be obtained based on the prediction sample of a current block and the parameter of the derived model S430.

The parameter of the derived linear model or convolutional model may be applied to the prediction sample of a current block to modify the prediction sample of a current block.

When a parameter for each of a plurality of models is derived for a current block, the parameter of each model may be applied to the prediction sample of a current block. Through this, a plurality of modified prediction samples corresponding respectively to a plurality of models may be obtained, and a final prediction sample may be obtained based on the weighted sum of a plurality of modified prediction samples.

The derived model is intended to improve the accuracy of a prediction block by compensating for a difference in a sample value between the virtual block of a current block and a prediction block, thereby improving encoding efficiency.

Meanwhile, information regarding the above-described model-based compensation may be signaled.

Specifically, a flag representing whether model-based compensation is applied to a specific unit at a corresponding high level may be signaled from a high-level syntax. Alternatively, the flag may represent whether model-based compensation is available for a specific unit at a corresponding high level from a high-level syntax. Here, a high-level syntax may include at least one of a sequence parameter set (SPS), a picture parameter set (PPS), a picture header (PH) or a slice header (SH).

As an example, the flag may be expressed as sps_model_based_compensation_enabled_flag, which may be signaled as in Table 6 below.

[Table 6]

| seq_parameter_set_rbsp( ) { | Descriptor |
|---|---|
| ... | |
| **sps_model_based_compensation_enabled_flag** | u(1) |
| ... | |
| } | |

According to Table 6, sps_model_based_compensation_enabled_flag may be a syntax signaled in an SPS. sps_model_based_compensation_enabled_flag may indicate whether there is a flag (mbc_flag) representing whether model-based compensation is applied to a current block. For example, when sps_model_based_compensation_enabled_flag is 1, it may indicate that mbc_flag may exist in a coding unit syntax regarding a current block. On the other hand, when sps_model_based_compensation_enabled_flag is 0, it may indicate that mbc_flag does not exist in a coding unit syntax regarding a current block. When sps_model_based_compensation_enabled_flag does not exist (i.e., when sps_model_based_compensation_enabled_flag is not signaled), the value of sps_model_based_compensation_enabled_flag may be derived as 0.

A flag (mbc_flag) representing whether model-based compensation is applied to a current block may be signaled. As an example, the flag may be signaled as in Table 7 below.

[Table 7]

| coding_unit( ) { | Descriptor |
|---|---|
| ... | |
| if( sps_model_based_compensation_enabled_flag ) | |
| **mbc_flag** | ae(v) |
| ... | |
| } | |

According to Table 7, mbc_flag may be signaled in a coding unit syntax regarding a current block. mbc_flag may indicate whether model-based compensation is applied in a current coding unit (or a current block). When mbc_flag is 1, it may indicate that model-based compensation is applied to a current coding unit. On the other hand, when mbc_flag is 0, it may indicate that model-based compensation is not applied to a current coding unit. When mbc_flag does not exist (i.e., when mbc_flag is not signaled), the value of mbc_flag may be derived as 0.

mbc_flag may be signaled regardless of the size of a current block. Alternatively, mbc_flag may be signaled only when the size of a current block is greater than or equal to a pre-defined threshold (T1). Alternatively, mbc_flag may be signaled only when the size of a current block is less than or equal to a pre-defined threshold (T2). Alternatively, mbc_flag may be signaled only when the size of a current block is greater than or equal to T1 and less than or equal to T2. Here, the size of a current block may be defined by the number of samples belonging to a current block (or the product of the width and height of a current block), any one of the width or height of a current block, the ratio of the width and height of a current block or the maximum or minimum value of the width and height of a current block.

As an example, mbc_flag may be signaled only when the number of samples belonging to a current block is less than 1024. Alternatively, mbc_flag may be signaled only when the number of samples belonging to a current block is greater than 32 or 64. Since model-based prediction accuracy may be low for a block that is too small or too large, the application of model-based compensation may be limited according to the size of a current block, thereby reducing the signaling burden of a flag and improving encoding efficiency.

mbc_flag flag may be adaptively signaled based on the prediction mode of a current block. mbc_flag may be signaled when the prediction mode of a current block corresponds to a prediction mode in which model-based compensation is allowed. The prediction mode in which model-based compensation is allowed may include at least one of an AMVP mode, a merge mode, an affine mode, a subblock-based merge mode, a geometric partitioning mode, a CIIP mode or an MHP mode.

mbc_flag may be adaptively signaled based on sps_model_based_compensation_enabled_flag. As an example, when sps_model_based_compensation_enabled_flag is 1, mbc_flag may be signaled, and when sps_model_based_compensation_enabled_flag is 0, mbc_flag may not be signaled.

Whether model-based compensation is applied to a current block may be determined. Based on information regarding the model-based compensation, it may be determined whether model-based compensation is applied to a current block. When it is determined that model-based compensation is applied to a current block (e.g., when mbc_flag is 1), S410 to S430 described above may be performed for a current block. Otherwise (e.g., when mbc_flag is 0), a prediction sample obtained in S400 may be set as the final prediction sample of a current block.

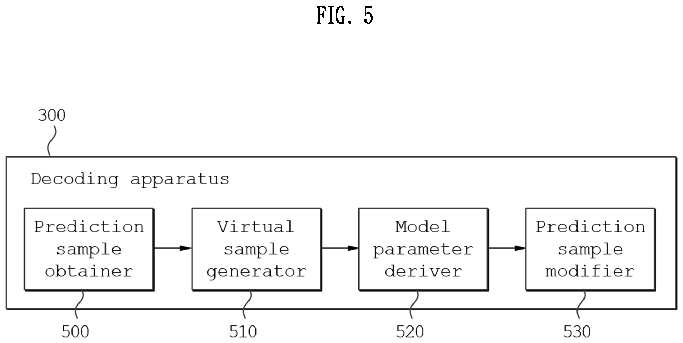

FIG. 5 illustrates a schematic configuration of the decoding apparatus 300 that performs a model-based compensation method according to the present disclosure.

Referring to FIG. 5, the decoding apparatus 300 may include at least one of the prediction sample obtainer 500, the virtual sample generator 510, the model parameter deriver 520 or the prediction sample modifier 530.

The prediction sample obtainer 500 may obtain the prediction sample of a current block. The prediction sample obtainer 500 may obtain the prediction sample of a current block based on intra prediction or inter prediction, which is the same as described by referring to FIG. 4.

The virtual sample generator 510 may generate a virtual sample for a current block. The virtual sample generator 510 may generate a virtual sample for a current block based on reconstructed sample(s) around a current block, and a method for generating a virtual sample is the same as described by referring to FIG. 4.

The model parameter deriver 520 may derive a parameter for model-based compensation based on the predicted sample and the virtual sample of a current block. The model parameter deriver 520 may derive a parameter based on a model pre-defined in a decoding apparatus (e.g., a linear model or a convolutional model) and may derive a parameter by selectively using any one of a plurality of models pre-defined in a decoding apparatus. It is the same as described by referring to FIG. 4, and an overlapping description will be omitted here.

The prediction sample modifier 530 may obtain a modified prediction sample based on the prediction sample of a current block and a parameter for model-based compensation.

The decoding apparatus 300 may further include a model-based compensation determiner (not shown). A model-based compensation determiner may determine whether model-based compensation is applied to a current block. A model-based compensation determiner may determine whether model-based compensation is applied to a current block based on information regarding model-based compensation described above. The information regarding model-based compensation may be decoded through the entropy decoder 310. When it is determined that model-based compensation is applied to a current block, a modified prediction sample may be obtained through the virtual sample generator 510, the model parameter deriver 520 and the prediction sample modifier 530.

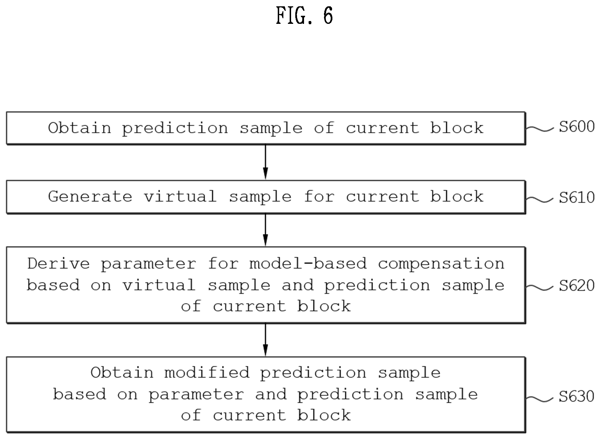

FIG. 6 illustrates a model-based compensation method performed by the encoding apparatus 200, as an embodiment according to the present disclosure.

Referring to FIG. 6, the prediction sample of a current block may be obtained S600. The prediction sample of a current block may be obtained based on intra prediction or inter prediction, which is the same as described by referring to FIG. 4.

Referring to FIG. 6, a virtual sample for a current block may be generated S610. A virtual sample for a current block may be generated based on reconstructed sample(s) around a current block, and a method for generating a virtual sample is the same as described by referring to FIG. 4.

Referring to FIG. 6, a parameter for model-based compensation may be derived based on the prediction sample and virtual sample of a current block S620. A parameter may be derived based on a model pre-defined in an encoding apparatus (e.g., a linear model or a convolutional model), and a parameter may be derived by selectively using any one of a plurality of models pre-defined in an encoding apparatus. For this purpose, an index specifying any one of a plurality of models may be defined. In other words, a model for the model-based compensation of a current block may be determined among a plurality of models, and an index for indicating the determined model may be encoded into a bitstream. A method for signaling the index is the same as described by referring to FIG. 4. Alternatively, the index may be derived based on the attribute of a current block. A method for deriving a parameter for model-based compensation is the same as described by referring to FIG. 4, and an overlapping description will be omitted here.

Referring to FIG. 6, a modified prediction sample may be obtained based on the prediction sample of a current block and a parameter for model-based compensation S630.

Whether model-based compensation is applied to a current block may be determined. When it is determined that model-based compensation is applied to a current block, S610 to S630 described above may be performed for a current block. Otherwise, a prediction sample obtained in S600 may be set as the final prediction sample of a current block. Based on a determination on whether model-based compensation is applied to a current block, information regarding model-based compensation described above may be encoded into a bitstream. A method for signaling the information regarding model-based compensation is the same as described by referring to FIG. 4.

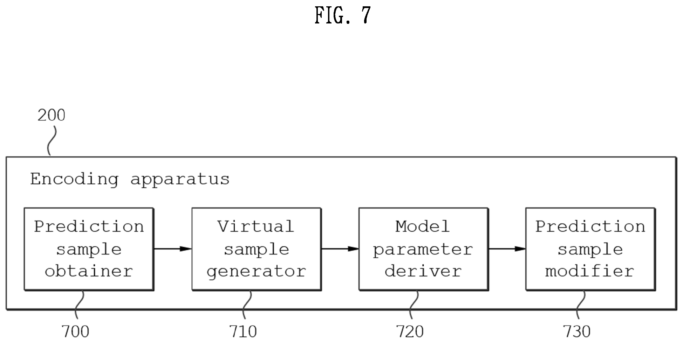

FIG. 7 illustrates a schematic configuration of the encoding apparatus 200 that performs a model-based compensation method according to the present disclosure.

Referring to FIG. 7, the encoding apparatus 200 may include at least one of the prediction sample obtainer 700, the virtual sample generator 710, the model parameter deriver 720 or the prediction sample modifier 730.

The prediction sample obtainer 700 may obtain the prediction sample of a current block. The prediction sample obtainer 700 may obtain the prediction sample of a current block based on intra prediction or inter prediction, which is the same as described by referring to FIG. 4.

The virtual sample generator 710 may generate a virtual sample for a current block. The virtual sample generator 710 may generate a virtual sample for a current block based on reconstructed sample(s) around a current block, and a method for generating a virtual sample is the same as described by referring to FIG. 4.

The model parameter deriver 720 may derive a parameter for model-based compensation based on the predicted sample and the virtual sample of a current block. The model parameter deriver 720 may derive a parameter based on a model pre-defined in an encoding apparatus (e.g., a linear model or a convolutional model) and may derive a parameter by selectively using any one of a plurality of models pre-defined in an encoding apparatus. It is the same as described by referring to FIGS. 4 and 6, and an overlapping description will be omitted here.

The prediction sample modifier 730 may obtain a modified prediction sample based on the prediction sample of a current block and a parameter for model-based compensation.

The encoding apparatus 200 may further include a model-based compensation determiner (not shown). A model-based compensation determiner may determine whether model-based compensation is applied to a current block. When it is determined that model-based compensation is applied to a current block, a modified prediction sample may be obtained through the virtual sample generator 710, the model parameter deriver 720 and the prediction sample modifier 730. Based on a determination on whether model-based compensation is applied to a current block, information regarding model-based compensation described above may be encoded into a bitstream. A method for signaling the information regarding model-based compensation is the same as described by referring to FIG. 4.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

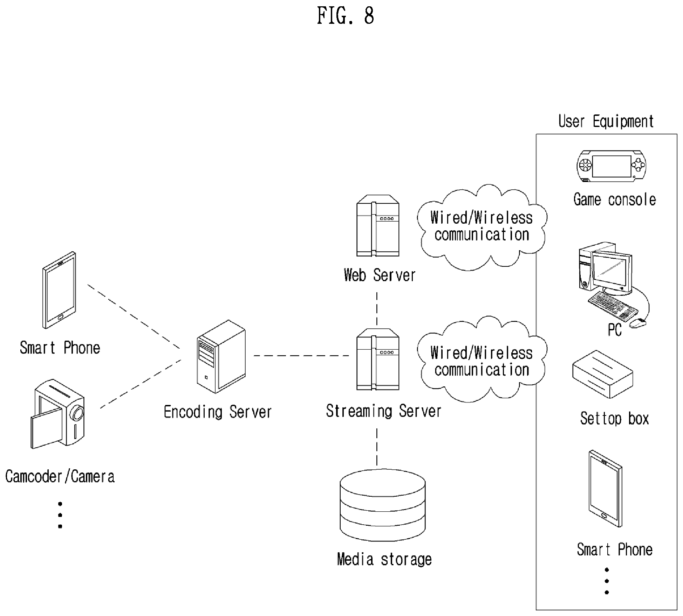

FIG. 8 shows an example of a contents streaming system to which embodiments of the present disclosure may be applied.

Referring to FIG. 8, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. A method, comprising:

   obtaining a prediction sample of a current block;
   generating a virtual sample for the current block;
   deriving a parameter for model-based compensation of the current block based on the prediction sample of the current block and the generated virtual sample;
   obtaining a modified prediction sample by applying the parameter to the prediction sample of the current block; and
   reconstructing the current block based on the modified prediction sample of the current block and a residual sample of the current block.

2. The method of claim 1, wherein the virtual sample is generated based on a planar mode for intra prediction.

3. The method of claim 1, wherein the virtual sample is generated based on a DC mode for intra prediction.

4. The method of claim 1, wherein the virtual sample is generated through a weighted sum of a sample generated by applying a predetermined prediction method to the current block and a reference sample of the current block, and wherein the reference sample includes at least one of a top neighboring sample or a left neighboring sample adjacent to the current block.

5. The method of claim 1, wherein the virtual sample is generated based on a predetermined intra prediction mode, and wherein the predetermined intra prediction mode is derived based on decoder-side intra mode derivation (DIMD) or template-based intra mode derivation (TIMD).

6. The method of claim 1, wherein the virtual sample is generated based on intra template matching prediction (intra-TMP).

7. The method of claim 1, wherein the virtual sample is generated based on matrix-based intra prediction (MIP).

8. The method of claim 1, wherein the virtual sample is generated for a sample position belonging to a partial region within the current block.

9. The method of claim 1, wherein the parameter is a parameter of a linear model or a parameter of a convolutional model.

10. The method of claim 1, wherein the parameter is derived as a parameter that minimizes a predetermined cost, and wherein the cost is defined based on a difference between the modified prediction sample and the virtual sample for each sample position within the current block.

11. The method of claim 1, wherein the modified prediction sample is obtained by applying the parameter to the prediction sample and a neighboring sample adjacent to the prediction sample, and
wherein the neighboring sample includes at least one of a top neighboring sample, a bottom neighboring sample, a left neighboring sample, a right neighboring sample, a top-left neighboring sample, a top-right neighboring sample, a bottom-left neighboring sample, or a bottom-right neighboring sample of the prediction sample.

12. A method, comprising:

obtaining a prediction sample of a current block;
generating a virtual sample for the current block;
deriving a parameter for model-based compensation of the current block based on the prediction sample of the current block and the generated virtual sample;
obtaining a modified prediction sample by applying the parameter to the prediction sample of the current block;
generating a residual sample of the current block based on the modified prediction sample of the current block; and
encoding the residual sample of the current block.

13. A computer-readable storage medium storing a bitstream generated by the method according to claim 12.

14. A method, comprising:

obtaining a bitstream for image information, wherein the bitstream is generated based on obtaining a prediction sample of a current block, generating a virtual sample for the current block, deriving a parameter for model-based compensation of the current block based on the prediction sample of the current block and the generated virtual sample, obtaining a modified prediction sample by applying the parameter to the prediction sample of the current block, generating a residual sample of the current block based on the modified prediction sample of the current block, and encoding the residual sample of the current block; and
transmitting data including the bitstream.

FIG.1

# FIG.2

ENCODING APPARATUS 200

INPUT IMAGE (PICTURE) → IMAGE PARTITIONER 210

220
INTER PREDICTOR 221
INTRA PREDICTOR 222

DPB
MEMORY 270

FILTER 260

230 231
TRANSFORMER 232
QUANTIZER 233
ENTROPY ENCODER 240 → BITSTREAM

250
INVERSE TRANSFORMER 235
DEQUANTIZER 234

EP 4 783 578 A1

FIG.3

FIG.4

```
┌─────────────────────────────────────────────────┐
│     Obtain prediction sample of current block     │──── S400
└─────────────────────────────────────────────────┘
                        │
                        ▼
┌─────────────────────────────────────────────────┐
│      Generate virtual sample for current block    │──── S410
└─────────────────────────────────────────────────┘
                        │
                        ▼
┌─────────────────────────────────────────────────┐
│  Derive parameter for model-based compensation    │
│  based on virtual sample and prediction sample    │──── S420
│                 of current block                  │
└─────────────────────────────────────────────────┘
                        │
                        ▼
┌─────────────────────────────────────────────────┐
│        Obtain modified prediction sample          │
│   based on parameter and prediction sample        │──── S430
│                 of current block                  │
└─────────────────────────────────────────────────┘
```

FIG. 5

300

Decoding apparatus

| Prediction sample obtainer | Virtual sample generator | Model parameter deriver | Prediction sample modifier |

500        510        520        530

FIG. 6

| Obtain prediction sample of current block | S600 |
| Generate virtual sample for current block | S610 |
| Derive parameter for model-based compensation based on virtual sample and prediction sample of current block | S620 |
| Obtain modified prediction sample based on parameter and prediction sample of current block | S630 |

FIG. 7

200

Encoding apparatus

| Prediction sample obtainer | Virtual sample generator | Model parameter deriver | Prediction sample modifier |
|---|---|---|---|

700                710                720                730

FIG. 8

## INTERNATIONAL SEARCH REPORT

| International application No. |
|---|
| **PCT/KR2024/014284** |

### A. CLASSIFICATION OF SUBJECT MATTER

**H04N 19/132**(2014.01)i; **H04N 19/587**(2014.01)i; **H04N 19/59**(2014.01)i; **H04N 19/13**(2014.01)i; **H04N 19/70**(2014.01)i

According to International Patent Classification (IPC) or to both national classification and IPC

### B. FIELDS SEARCHED

Minimum documentation searched (classification system followed by classification symbols)

H04N 19/132(2014.01); H04N 19/105(2014.01); H04N 19/117(2014.01); H04N 19/136(2014.01); H04N 19/157(2014.01); H04N 19/86(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 예측(predict), 가상 샘플(virtual sample), 보정(correct), 모델(model), 파라미터 (parameter)

### C. DOCUMENTS CONSIDERED TO BE RELEVANT

| Category* | Citation of document, with indication, where appropriate, of the relevant passages | Relevant to claim No. |
|---|---|---|
| A | JP 2023-130359 A (INTERDIGITAL VC HOLDINGS INC.) 20 September 2023 (2023-09-20)<br>See paragraphs [0110] and [0137]-[0138]; and figures 12 and 18. | 1-14 |
| A | WO 2023-172851 A1 (INNOPEAK TECHNOLOGY, INC.) 14 September 2023 (2023-09-14)<br>See paragraphs [0065]-[0068]; claims 1-2; and figure 8. | 1-14 |
| A | US 2022-0239901 A1 (GUANGDONG OPPO MOBILE TELECOMMUNICATIONS CORP., LTD.) 28 July 2022 (2022-07-28)<br>See paragraphs [0055]-[0063]; claim 1; and figure 4. | 1-14 |
| A | US 2021-0352277 A1 (HUAWEI TECHNOLOGIES CO., LTD.) 11 November 2021 (2021-11-11)<br>See claims 1-11. | 1-14 |
| A | KR 10-2022-0104059 A (HUAWEI TECHNOLOGIES CO., LTD.) 25 July 2022 (2022-07-25)<br>See claims 1-8. | 1-14 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 December 2024** | **26 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/014284**

| Patent document cited in search report | | | Publication date (day/month/year) | Patent family member(s) | | | Publication date (day/month/year) |
|---|---|---|---|---|---|---|---|
| JP | 2023-130359 | A | 20 September 2023 | CN | 111630856 | A | 04 September 2020 |
| | | | | CN | 111630856 | B | 07 May 2024 |
| | | | | EP | 3744092 | A1 | 02 December 2020 |
| | | | | JP | 7299221 | B2 | 27 June 2023 |
| | | | | US | 11722694 | B2 | 08 August 2023 |
| | | | | US | 2021-0051342 | A1 | 18 February 2021 |
| | | | | WO | 2019-147910 | A1 | 01 August 2019 |
| WO | 2023-172851 | A1 | 14 September 2023 | CN | 118830253 | A | 22 October 2024 |
| US | 2022-0239901 | A1 | 28 July 2022 | CN | 112335245 | A | 05 February 2021 |
| | | | | EP | 3843399 | A1 | 30 June 2021 |
| | | | | EP | 3843399 | B1 | 06 September 2023 |
| | | | | JP | 2022-503990 | A | 12 January 2022 |
| | | | | JP | 7518065 | B2 | 17 July 2024 |
| | | | | KR | 10-2021-0070368 | A | 14 June 2021 |
| | | | | US | 11388397 | B2 | 12 July 2022 |
| | | | | WO | 2020-073990 | A1 | 16 April 2020 |
| US | 2021-0352277 | A1 | 11 November 2021 | CN | 113170152 | A | 23 July 2021 |
| | | | | CN | 113170152 | B | 07 July 2023 |
| | | | | EP | 3868098 | A1 | 25 August 2021 |
| | | | | EP | 3868098 | B1 | 10 July 2024 |
| | | | | US | 11985304 | B2 | 14 May 2024 |
| | | | | WO | 2020-149770 | A1 | 23 July 2020 |
| KR | 10-2022-0104059 | A | 25 July 2022 | CN | 115665408 | A | 31 January 2023 |
| | | | | CN | 115665408 | B | 05 January 2024 |
| | | | | EP | 4062637 | A2 | 28 September 2022 |
| | | | | JP | 2023-508571 | A | 02 March 2023 |
| | | | | JP | 7469475 | B2 | 16 April 2024 |
| | | | | US | 2022-0345711 | A1 | 27 October 2022 |
| | | | | WO | 2021-045654 | A2 | 11 March 2021 |

Form PCT/ISA/210 (patent family annex) (July 2022)